# EUROPEAN PATENT SPECIFICATION

(11) **EP 4 253 750 B1**
(45) Date of publication and mention of the grant of the patent: **04.06.2025**
(21) Application number: 23159329.4
(22) Date of filing: 01.03.2023
(51) Int. Cl.: F02M 26/12, F02M 26/16, F02M 26/23, F02M 26/41

(54) **EGR DEVICE FOR INTERNAL COMBUSTION ENGINE**
AGR-VORRICHTUNG FÜR EINEN VERBRENNUNGSMOTOR
DISPOSITIF EGR POUR MOTEUR À COMBUSTION INTERNE

(30) Priority: 31.03.2022 JP 2022059898
(43) Date of publication of application: 04.10.2023
(73) Proprietor: Suzuki Motor Corporation, Hamamatsu-shi, Shizuoka 432-8611 (JP)
(72) Inventor: ITO, Yasutaka, Hamamatsu-shi, 432-8611 (JP)
(74) Representative: Plasseraud IP

(56) References cited:
- EP-A1- 2 565 438
- CN-A- 110 159 449
- US-A1- 2020 378 347
- US-B2- 9 051 904

## Description

### [Technical Field]

The present invention relates to an EGR device for an internal combustion engine.

### [Background Art]

There has been known an internal combustion engine including an EGR (Exhaust Gas Recirculation) device (see Patent Literature 1, Patent Literature 2, or Patent Literature 3).

The internal combustion engine includes an exhaust manifold, an exhaust cleaning device, and an exhaust pipe which are connected to a front surface of the internal combustion engine and extend downward from the internal combustion engine, an intake manifold which is connected to a rear surface of the internal combustion engine, an EGR passage portion which interconnects the exhaust cleaning device and the intake manifold and refluxes, to the intake manifold, a part of exhaust gas discharged from the internal combustion engine into the exhaust cleaning device, and an EGR valve which is attached to a cylinder head and adjusts a flow rate of the EGR gas flowing through the EGR passage portion.

The EGR valve is adjacent to the exhaust manifold at the front surface of the internal combustion engine and is installed at the same height position as the exhaust manifold.

### [Citation List]

### [Patent Literature]

[Patent Literature 1] JP 6308053 B2
[Patent Literature 2] US 2020/378347 A1
[Patent Literature 3] EP 2565438 A1

### [Summary of Invention]

### [Technical Problem]

In such a conventional engine, however, the EGR valve is installed adjacent to the exhaust manifold at the front surface of the internal combustion engine, and is likely to be affected by exhaust heat emanating from the exhaust manifold. Hence, there is still room for improvement.

The present invention has been made in view of the above-described circumstances, and an object thereof is to provide an EGR device for an internal combustion engine capable of inhibiting an EGR valve from being affected by exhaust heat.

### [Solution to Problem]

There is provided an EGR device for an internal combustion engine in accordance with claim 1.

### [Advantageous Effect of Invention]

According to the present invention described above, it is possible to inhibit the EGR valve from being affected by exhaust heat.

### [Brief Description of Drawings]

Figure 1 is a front view of an internal combustion engine including an EGR device according to an embodiment of the present invention.
Figure 2 is a left side view of the internal combustion engine including the EGR device according to the embodiment of the present invention.
Figure 3 is a front view of a cylinder head and a cylinder head cover of the internal combustion engine according to the embodiment of the present invention.
Figure 4 is a left side view of the cylinder head and the cylinder head cover of the internal combustion engine according to the embodiment of the present invention.
Figure 5 is a plan view of an EGR housing portion of the internal combustion engine according to the embodiment of the present invention.
Figure 6 is a perspective view of a front wall side of the EGR housing portion of the internal combustion engine according to the embodiment of the present invention.

### [Description of Embodiment]

An EGR device according to an embodiment of the present invention is configured to be mounted on an internal combustion engine of which a body is formed, at an exhaust side wall thereof, with an exhaust outlet through which an exhaust gas from the body is introduced into an exhaust passage portion, the exhaust passage portion being connected to the exhaust outlet, the EGR device including: an EGR passage portion branching from the exhaust passage portion to circulate, as an EGR gas, a part of the introduced exhaust gas in the exhaust passage portion into the body; and an EGR valve to adjust a flow rate at which the EGR gas flows through the EGR passage portion, wherein the EGR valve is attached to the exhaust side wall of the body, the EGR valve being located above the exhaust outlet and the exhaust passage portion.

With the above-described configuration, the EGR device for the internal combustion engine according to the embodiment of the present invention can inhibit the EGR valve from being affected by exhaust heat.

### [Embodiment]

An EGR device for an internal combustion engine according to an embodiment of the present invention will be described below with reference to the drawings.

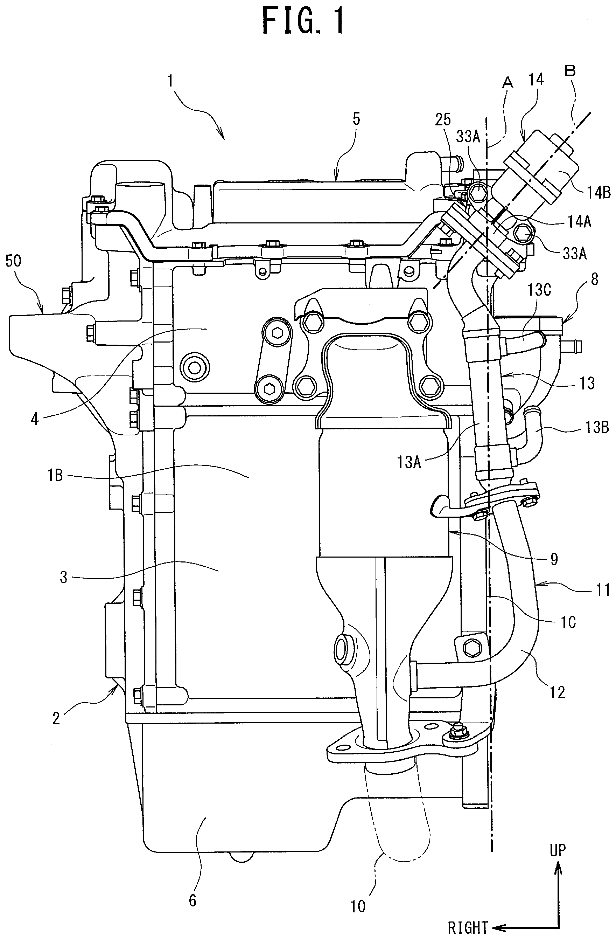

Figures 1 to 6 are views showing the EGR device for the internal combustion engine according to the embodiment of the present invention. In Figures 1 to 6, up-down, front-rear, and left-right directions correspond to those in an internal combustion engine mounted on a vehicle. Hereinafter, a front-rear direction in a vehicle will be simply referred to as front-rear direction; a left-right direction therein (vehicle width direction) will be simply referred to as left-right direction; and an up-down direction therein (vehicle height direction) will be simply referred to as up-down direction.

A configuration will be described first.

In Figure 1, an engine 1 is provided in an engine room (not shown) of a vehicle. The engine 1 has an engine body 2, and the engine body 2 is composed of a cylinder block 3, a cylinder head 4, a cylinder head cover 5, and an oil pan 6. The engine 1 and the engine body 2 according to the present embodiment constitute an internal combustion engine and a body thereof respectively.

The cylinder head 4 is attached to an upper portion of the cylinder block 3, and the cylinder head cover 5 is attached to an upper portion of the cylinder head 4. The oil pan 6 is attached to a lower portion of the cylinder block 3, and lubrication oil for the engine 1 is accumulated in the oil pan 6.

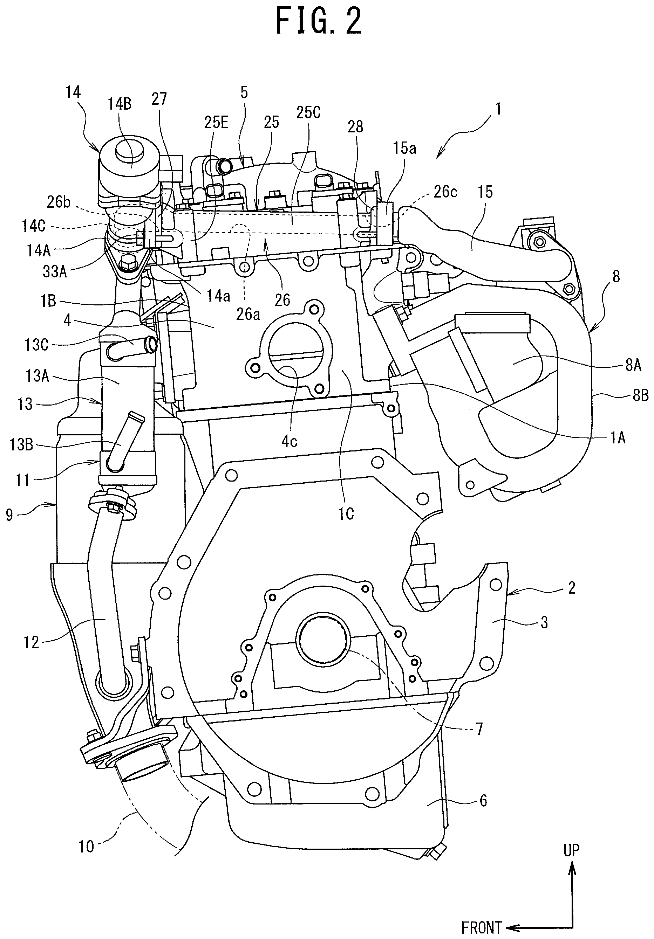

A plurality of cylinders (not shown) are provided in the cylinder block 3, and the cylinders are arrayed in the vehicle width direction. Respective pistons (not shown) are housed in the cylinders, and each piston is connected to a crankshaft 7 (see Figure 2) via a connecting rod (not shown).

The engine 1 according to the present embodiment is a transversely mounted engine with the crankshaft 7 extending in the vehicle width direction, and the vehicle is an FF (front-engine, front-wheel drive) vehicle.

Each piston reciprocates inside the cylinder, thereby rotating the crankshaft 7 via the connecting rod.

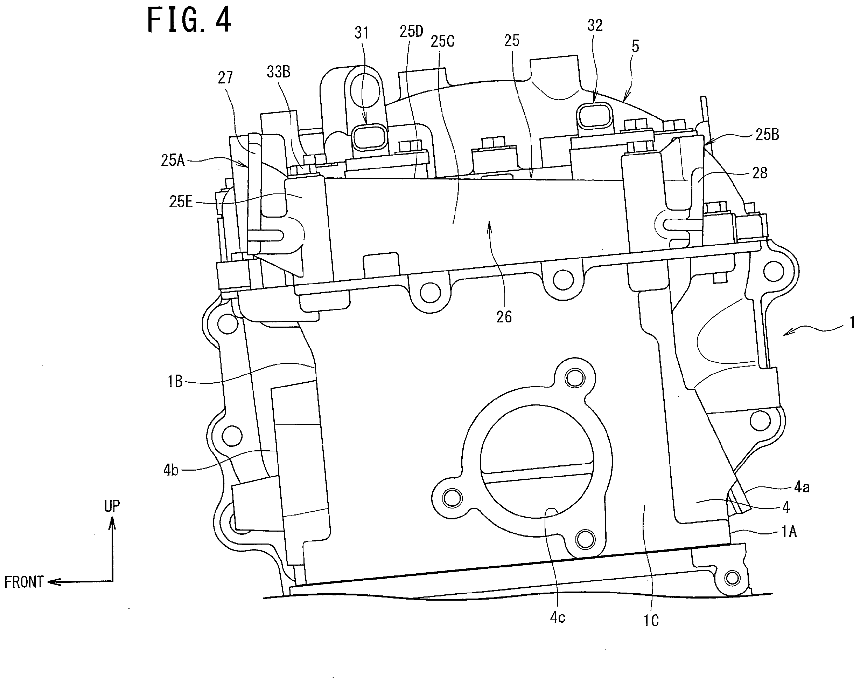

A plurality of intake ports 4a and an exhaust collection portion 4b (see Figure 4) are formed in the cylinder head 4. The exhaust collection portion 4b according to the present embodiment constitutes an exhaust outlet.

The intake ports 4a communicate with the respective cylinders and introduce incoming air into the cylinders. The exhaust collection portion 4b communicates with the respective cylinders through a plurality of exhaust ports (not shown). That is, the exhaust ports extend from the respective cylinders to the exhaust collection portion 4b, and the exhaust collection portion 4b collects the exhaust ports.

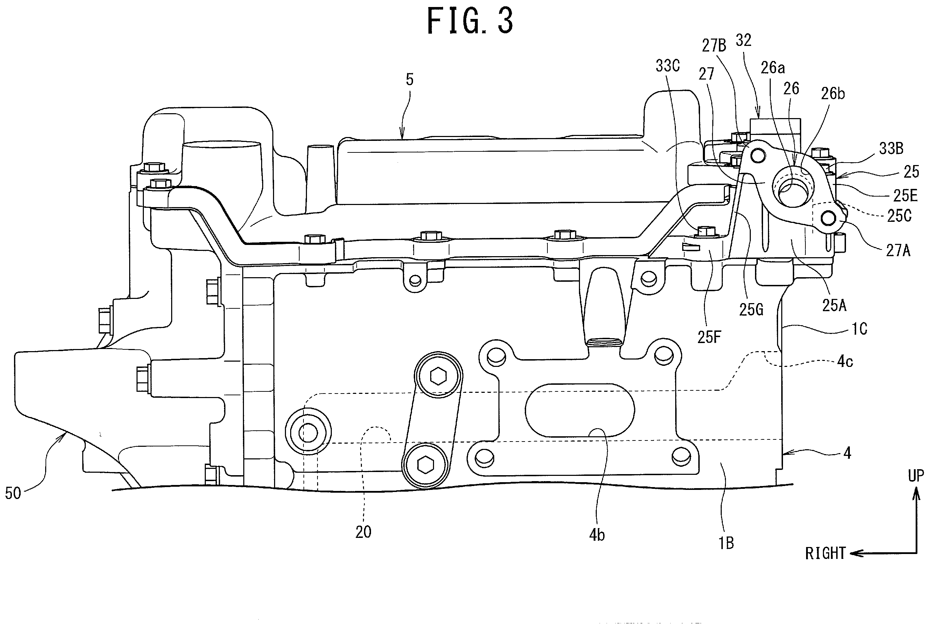

As indicated by imaginary lines in Figure 3, a coolant passage 20 is provided in the cylinder head 4. The coolant passage 20 extends from a right end portion of the cylinder head 4 toward a left end portion.

Coolant is introduced from a coolant passage (not shown) which is formed in the cylinder block 3 into a right end portion of the coolant passage 20. The coolant introduced into the coolant passage 20 flows to the left along the coolant passage 20. For this reason, the cylinder head 4 is cooled by the coolant.

As shown in Figures 2 and 4, the engine 1 has an intake side wall 1A on a side where the intake ports 4a open and an exhaust side wall 1B which is located on a side (a front side) opposite to the intake side wall 1A and is on a side where the exhaust collection portion 4b opens.

The intake side wall 1A forms rear walls of the cylinder block 3, the cylinder head 4, and the cylinder head cover 5 at which the intake ports 4a open, and the exhaust side wall 1B forms front walls of the cylinder block 3, the cylinder head 4, and the cylinder head cover 5 at which the exhaust collection portion 4b opens.

As shown in Figure 4, the engine 1 has a coolant discharge side wall 1C. At the coolant discharge side wall 1C, a coolant discharge port 4c which discharges coolant from the coolant passage 20 is formed in the cylinder head 4.

The coolant discharge side wall 1C is connected to a left end portion of the intake side wall 1A and a left end portion of the exhaust side wall 1B and extends in the front-rear direction. A chain cover 50 is attached to a right side wall on the opposite side of the engine 1 from the coolant discharge side wall 1C (see Figure 1).

As shown in Figure 2, an intake manifold 8 is attached to the intake side wall 1A. The intake manifold 8 has a surge tank 8A and a plurality of branch pipes 8B (one of which is shown) corresponding in number to the cylinders.

For example, if the engine 1 is a 3-cylinder engine, three branch pipes 8B are provided. An intake pipe (not shown) is connected to the surge tank 8A via a throttle body (not shown).

Incoming air which is cleaned by an air cleaner (not shown) is introduced into the intake pipe, and the incoming air is introduced into the surge tank 8A through the throttle body.

A throttle valve (not shown) is housed in the throttle body, and the throttle valve adjusts the amount of incoming air to be introduced into the surge tank 8A.

The plurality of branch pipes 8B extend from the surge tank 8A to the respective intake ports 4a and distribute incoming air which is introduced into the surge tank 8A among the respective intake ports 4a.

As shown in Figures 1 and 2, an exhaust cleaning device 9 is attached to the exhaust side wall 1B. Exhaust gas which is burned inside each cylinder is discharged from the cylinder through the exhaust port and collected in the exhaust collection portion 4b, and is then discharged from the exhaust collection portion 4b into the exhaust cleaning device 9.

The exhaust cleaning device 9 cleans exhaust gas which is discharged from the exhaust collection portion 4b and discharges the cleaned exhaust gas into the atmosphere through an exhaust pipe 10 which is connected to a downstream end of the exhaust cleaning device 9. The exhaust cleaning device 9 and the exhaust pipe 10 according to the present embodiment constitute an exhaust passage portion.

The engine 1 is provided with an EGR (exhaust gas recirculation) device 11. The EGR device 11 includes upstream-side EGR piping 12, an EGR cooler 13, an EGR valve 14, and downstream-side EGR piping 15.

An upstream end of the upstream-side EGR piping 12 is connected to the exhaust cleaning device 9 and branches from the exhaust cleaning device 9. A part of exhaust gas is introduced as EGR gas from the exhaust cleaning device 9 into the upstream-side EGR piping 12. The terms upstream and downstream here refer to upstream and downstream in a direction in which incoming air, exhaust gas, or EGR gas flows.

The EGR valve 14 is located downstream of the upstream-side EGR piping 12, and the upstream-side EGR piping 12 is located upstream of the EGR valve 14.

The EGR cooler 13 is provided adjacent to the exhaust cleaning device 9 at the exhaust side wall 1B of the engine 1.

A downstream end of the upstream-side EGR piping 12 is connected to an upstream end of the EGR cooler 13. The EGR cooler 13 has an EGR cooler body portion 13A through which EGR gas and coolant flow, a coolant introduction portion 13B which introduces coolant into the EGR cooler body portion 13A, and a coolant discharge portion 13C which discharges the coolant from the EGR cooler 13.

The EGR cooler 13 cools EGR gas which is introduced from the upstream-side EGR piping 12 by heat exchange between the EGR gas and coolant.

A downstream end of the EGR cooler 13 is connected to the EGR valve 14, and the EGR valve 14 is connected to an EGR housing portion 25. The EGR valve 14 adjusts a flow rate of EGR gas which flows through an EGR housing passage portion 26 (to be described later).

An upstream end of the downstream-side EGR piping 15 is connected to the EGR housing portion 25, and EGR gas which is introduced into the EGR housing portion 25 is discharged into the downstream-side EGR piping 15. A downstream end of the downstream-side EGR piping 15 is connected to the surge tank 8A, and the EGR gas discharged into the downstream-side EGR piping 15 is introduced into the surge tank 8A.

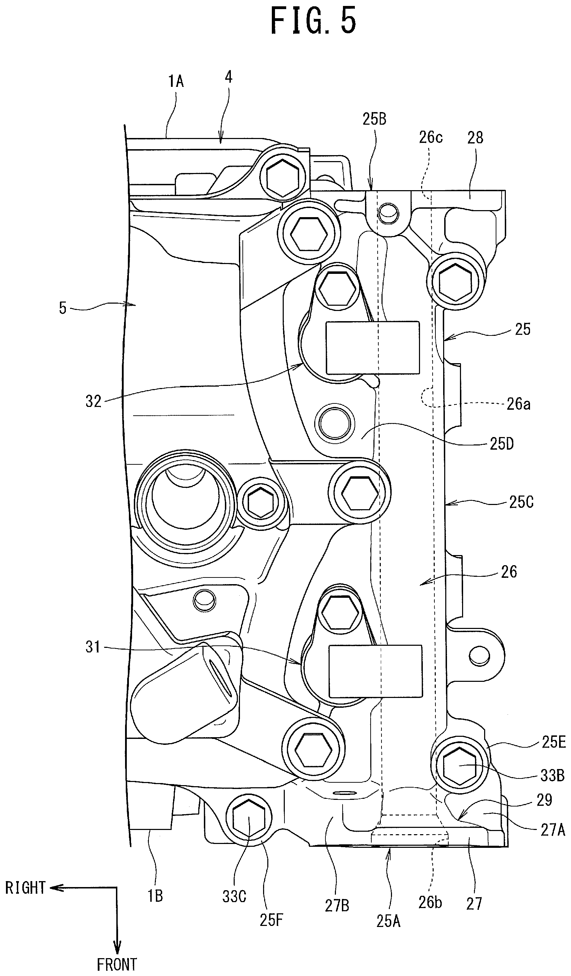

As shown in Figures 2 and 5, the EGR housing portion 25 that is separate from the cylinder head 4 is provided on the left end portion of the cylinder head 4. The EGR housing portion 25 is provided to the left of the cylinder head cover 5 and is adjacent to the cylinder head cover 5.

The cylinder head cover 5 is made of resin, and the EGR housing portion 25 is made of metal, such as an aluminum die-casting.

As shown in Figure 5, the EGR housing portion 25 has a front wall 25A, a rear wall 25B, a left side wall 25C, and an upper wall 25D.

The front wall 25A constitutes a part of the exhaust side wall 1B of the engine 1, and the rear wall 25B constitutes a part of the intake side wall 1A of the engine 1. That is, the front wall 25A is formed on the same side as the exhaust side wall 1B of the engine 1, and the rear wall 25B is located on the opposite side from the front wall 25A and is formed on the same side as the intake side wall 1A.

The left side wall 25C connects a left end portion of the front wall 25A and a left end portion of the rear wall 25B, and the upper wall 25D connects an upper end portion of the front wall 25A, an upper end portion of the rear wall 25B, and an upper end portion of the left side wall 25C. The left side wall 25C according to the present embodiment constitutes a connection wall.

As shown in Figure 5, the EGR housing passage portion 26 is provided in the EGR housing portion 25. The EGR housing passage portion 26 is formed in a tubular shape, and an EGR passage 26a through which EGR gas flows is formed inside the EGR housing passage portion 26.

As shown in Figures 2 and 5, the EGR housing passage portion 26 has an EGR gas introduction port 26b and an EGR gas discharge port 26c. The EGR gas introduction port 26b is provided at the front wall 25A (see Figure 3), and the EGR gas discharge port 26c is provided at the rear wall 25B.

The EGR gas introduction port 26b is an open end on an upstream side of the EGR passage 26a, and the EGR gas discharge port 26c is an open end on a downstream side of the EGR passage 26a. The EGR housing passage portion 26 is obliquely provided such that the EGR gas introduction port 26b is located above the EGR gas discharge port 26c.

The EGR passage 26a is composed of a through-hole which extends from the EGR gas introduction port 26b to the EGR gas discharge port 26c, and the EGR gas introduction port 26b is located at a position higher than the EGR gas discharge port 26c (see Figure 2). The EGR passage 26a according to the present embodiment constitutes a through-hole.

The upstream-side EGR piping 12, the EGR cooler 13, the EGR housing passage portion 26, and the downstream-side EGR piping 15 according to the present embodiment constitute the EGR passage portion. A part of exhaust gas which is discharged into the exhaust cleaning device 9 is refluxed to the intake manifold 8 through the upstream-side EGR piping 12, the EGR cooler 13, the EGR housing passage portion 26, and the downstream-side EGR piping 15.

The EGR housing passage portion 26 constitutes a head cover EGR passage portion, the EGR gas introduction port 26b constitutes an exhaust-side open portion, and the EGR gas discharge port 26c constitutes an intake-side open portion.

As shown in Figure 3, a flange portion 27 is provided at the front wall 25A, and the flange portion 27 is provided above the exhaust collection portion 4b. The EGR gas introduction port 26b is formed inside the flange portion 27, and the flange portion 27 surrounds the EGR gas introduction port 26b.

A first fastening portion 27A and a second fastening portion 27B both of which are boss-shaped are provided on the flange portion 27. The first fastening portion 27A is provided at an intersection 29 at which the front wall 25A and the left side wall 25C intersect (see Figure 5). The second fastening portion 27B is provided at the front wall 25A.

As shown in Figure 3, the first fastening portion 27A and the second fastening portion 27B are away from each other in the left-right direction, and the first fastening portion 27A is provided diagonally below the left of the second fastening portion 27B, the first fastening portion 27A being located at the left side of the second fastening portion 27B. That is, the first fastening portion 27A and the second fastening portion 27B are away from each other in a horizontal direction (the left-right direction), of which height positions are different from each other.

Note that the first fastening portion 27A may be located above the second fastening portion 27B. That is, the first fastening portion 27A may be provided diagonally above the left of the second fastening portion 27B, the first fastening portion 27A being located at the left side of the second fastening portion 27B.

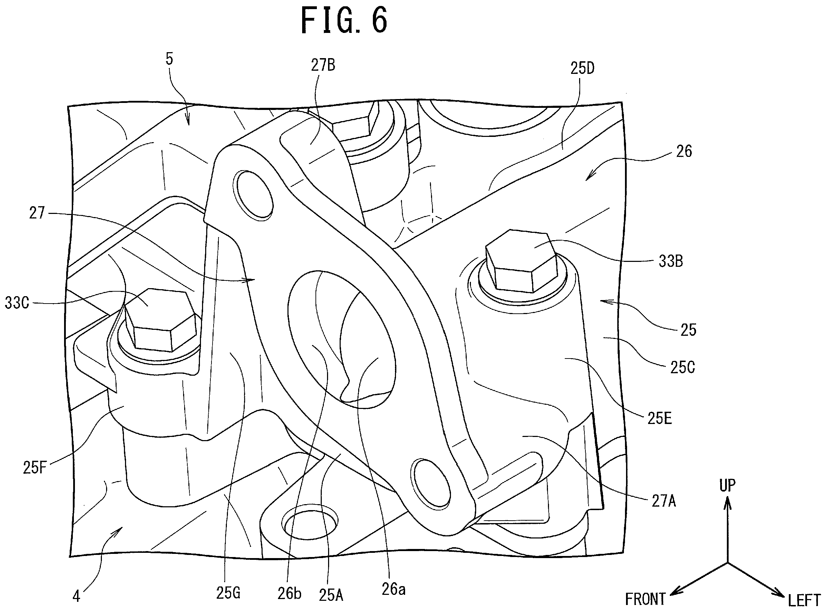

As shown in Figure 6, a boss portion 25E is provided at the left side wall 25C of the EGR housing portion 25, and the first fastening portion 27A is connected to the boss portion 25E and the EGR housing passage portion 26.

Specifically, the EGR housing passage portion 26 includes the EGR passage 26a of a through-hole formed therein, the EGR housing passage portion being formed in a tubular shape so as to surround the EGR passage 26a. The first fastening portion 27A is connected to an outer wall of such a tubular EGR housing passage portion 26.

The boss portion 25E is fastened to the cylinder head 4 by a bolt 33B and thus, the left side wall 25C is fixed to the cylinder head 4 through the boss portion 25E and the bolt 33B.

A boss portion 25F is provided at the front wall 25A of the EGR housing portion 25. The boss portion 25F is fastened to the cylinder head 4 by a bolt 33C and thus, the front wall 25A is fixed to the cylinder head 4 through the boss portion 25F and the bolt 33C.

A rib 25G is provided at the front wall 25A. The rib 25G extends upward from the boss portion 25F toward the second fastening portion 27B and connects the boss portion 25F and the second fastening portion 27B to each other.

The bolt 33B and the bolt 33C according to the present embodiment constitute a first fastener and a second fastener respectively. The boss portion 25E constitutes a connection wall fixing portion, and the boss portion 25F constitutes an exhaust side wall fixing portion.

As shown in Figure 1, the EGR valve 14 has an EGR valve body 14A and a driving portion 14B. An EGR passage portion is formed inside the EGR valve body 14A, this EGR passage portion communicating between the EGR passage portion formed inside the EGR cooler 13 and the EGR housing passage portion 26.

A valve element 14C (see Figure 2) is provided in the EGR valve body 14A of the EGR valve 14, and the valve element 14C adjusts the degree of opening of the EGR passage portion in the EGR valve body 14A.

The driving portion 14B is connected to the EGR valve body 14A, and drives the valve element 14C to adjust the degree of opening of the EGR passage portion in the EGR valve body 14A and adjusts a flow rate of EGR gas which flows through the EGR housing passage portion 26.

A flange portion 14a is provided in the EGR valve body 14A. In the EGR valve 14, the flange portion 14a is fastened to the first fastening portion 27A and the second fastening portion 27B of the flange portion 27 by bolts 33A in a state where the flange portion 14a is positioned on the flange portion 27.

With the above-described configuration, the EGR valve 14 is attached to the front wall 25A of the EGR housing portion 25 so as to cover the EGR gas introduction port 26b. The bolt 33A according to the present embodiment constitutes a third fastener. The flange portion 27 constitutes an internal combustion engine-side flange portion, and the flange portion 14a constitutes an EGR valve-side flange portion.

The EGR valve 14 according to the present embodiment is attached to the front wall 25A of the EGR housing portion 25 to be located above the exhaust collection portion 4b and the exhaust cleaning device 9.

As shown in Figures 2 and 5, a flange portion 28 is provided at the rear wall 25B, and the EGR gas discharge port 26c is formed inside the flange portion 28.

A flange portion 15a of the downstream-side EGR piping 15 is attached to the flange portion 28. An EGR gas introduction port (not shown) is provided inside the flange portion 15a, and EGR gas which flows through the EGR passage 26a is discharged from the EGR gas discharge port 26c into the downstream-side EGR piping 15 through the EGR gas introduction port in the flange portion 15a.

In other words, in the engine 1 according to the present embodiment, the EGR housing portion 25 is attached to the left end portion of the cylinder head 4 on and above the cylinder head 4, and EGR gas is introduced from an exhaust side to an intake side by the EGR housing passage portion 26 provided in the EGR housing portion 25.

The EGR housing portion 25 according to the present embodiment constitutes a cylinder head cover. Note that the EGR housing portion 25 may be integral with the cylinder head cover 5 and that the EGR housing passage portion 26 may be formed in the cylinder head cover 5.

As shown in Figure 1, the EGR valve 14 is installed such that a central axis B thereof is inclined at an angle of about 45 degrees with respect to a vertical axis A in front view of the engine 1. The driving portion 14B is farther away from the exhaust cleaning device 9 than the EGR valve body 14A is, the EGR valve body 14A being located between the driving portion 14B and the exhaust cleaning device 9.

As shown in Figure 4, an exhaust cam angle sensor 31 and an intake cam angle sensor 32 are attached to the upper wall 25D of the EGR housing portion 25. The exhaust cam angle sensor 31 detects a rotational angle (rotational phase) of an exhaust camshaft (not shown), and the intake cam angle sensor 32 detects a rotational angle (rotational phase) of an intake camshaft (not shown).

Effects of the EGR device 11 for the engine 1 according to the present embodiment will be described.

The EGR device 11 for the engine 1 according to the present embodiment includes the EGR valve 14 that adjusts a flow rate of EGR gas which flows through the EGR housing passage portion 26, and the EGR valve 14 is located above the exhaust collection portion 4b and the exhaust cleaning device 9 and is attached to the front wall 25A of the EGR housing portion 25.

With the above-described configuration, the EGR valve 14 can be inhibited from being affected by radiant heat of exhaust gas which flows through the exhaust cleaning device 9. For this reason, durability of the EGR valve 14 can be enhanced. Additionally, since the EGR valve 14 can be protected from heat, control accuracy of the driving portion 14B can be prevented from decreasing. The control accuracy here refers to accuracy of opening and closing the valve element 14C.

Since the EGR device 11 can be installed adjacent to the exhaust cleaning device 9 at the side of the exhaust cleaning device 9, it is possible to inhibit the EGR valve 14 from being affected by radiant heat of exhaust gas which flows through the exhaust cleaning device 9 while effectively utilizing a dead space at the side of the exhaust cleaning device 9. This results in achievement of reduction in size of the engine 1.

In the EGR device 11 for the engine 1 according to the present embodiment, the EGR valve 14 has the EGR valve body 14A having the valve element 14C that adjusts a flow rate of EGR gas which flows through the EGR housing passage portion 26 and the driving portion 14B that is attached to the EGR valve body 14A and drives the valve element 14C.

The control accuracy is likely to decrease for the EGR valve body 14A, through which high-temperature exhaust gas flows, if the driving portion 14B that drives the valve element 14C is affected by heat.

In the EGR valve 14 according to the present embodiment, the driving portion 14B is installed more away from the exhaust cleaning device 9 than the EGR valve body 14A is.

For the above-described reason, the driving portion 14B can be installed farther from the exhaust cleaning device 9, and the driving portion 14B can be more effectively inhibited from being affected by radiant heat of exhaust gas which flows through the exhaust cleaning device 9.

It is thus possible to achieve protection of the driving portion 14B from heat and more effective prevention of decrease in the control accuracy of the driving portion 14B, in addition to enhancement of the durability of the EGR valve 14.

In the EGR device 11 for the engine 1 according to the present embodiment, the EGR housing passage portion 26 that constitutes a part of the EGR passage portion is provided in the EGR housing portion 25, and the EGR valve 14 is attached to the front wall 25A of the EGR housing portion 25.

In other words, in the EGR device 11 according to the present embodiment, the EGR housing passage portion 26 that constitutes a part of the EGR passage portion is formed in the EGR housing portion 25 that is adjacent to the cylinder head cover 5 that is provided at a highest position in the engine 1, and EGR gas is allowed to reflux from the exhaust side to the intake side via the EGR housing portion 25.

With the above-described configuration, the EGR valve 14 can be installed farther from the exhaust cleaning device 9, and the EGR valve 14 can be more effectively inhibited from being affected by radiant heat of exhaust gas which flows through the exhaust cleaning device 9.

In the EGR device 11 for the engine 1 according to the present embodiment, the EGR housing portion 25 has the rear wall 25B on the opposite side from the front wall 25A.

The EGR housing passage portion 26 has the EGR passage 26a that extends from the EGR gas introduction port 26b formed at the front wall 25A of the EGR housing portion 25 to the EGR gas discharge port 26c formed at the rear wall 25B.

Additionally, the EGR valve 14 is attached to the front wall 25A so as to cover the EGR gas introduction port 26b, and the EGR gas introduction port 26b is located at a higher position than the EGR gas discharge port 26c.

With the above-described configuration, the EGR valve 14 can be installed at a high position away from the exhaust cleaning device 9, and the EGR valve 14 can be more effectively inhibited from being affected by radiant heat of exhaust gas which flows through the exhaust cleaning device 9.

For the above-described reason, it is possible to achieve protection of the EGR valve 14 from heat and more effective prevention of decrease in the control accuracy of the driving portion 14B, in addition to more effective enhancement of the durability of the EGR valve 14.

### [Reference Signs List]

1: engine (internal combustion engine)
1B: exhaust side wall
2: engine body (body of internal combustion engine)
4: cylinder head
4b: exhaust collection portion (exhaust outlet)
9: exhaust cleaning device (exhaust passage portion)
10: exhaust pipe (exhaust passage portion)
11: EGR device
12: upstream-side EGR piping (EGR passage portion)
13: EGR cooler (EGR passage portion)
14: EGR valve
14A: EGR valve body
14B: driving portion
14C: valve element
15: downstream-side EGR piping (EGR passage portion)
25: EGR housing portion (cylinder head cover)
25A: front wall (exhaust side wall)
25B: rear wall (intake side wall)
26: EGR housing passage portion (EGR passage portion, head cover EGR passage portion)
26a: EGR passage (through-hole)
26b: EGR gas introduction port (exhaust-side open portion)
26c: EGR gas discharge port (intake-side open portion)

## Claims

1. An internal combustion engine (1) with an EGR device (11) mounted on a vehicle, a body (2) of the internal combustion engine (1) being formed, at an exhaust side wall (1B) thereof, with an exhaust outlet (4b) through which an exhaust gas from the body (2) is introduced into an exhaust passage portion (9, 10), the exhaust passage portion (9, 10) being connected to the exhaust outlet (4b) and constituted by an exhaust cleaning device (9) and an exhaust pipe (10),
the EGR device comprising:
an EGR passage portion (12, 13, 26, 15) branching from the exhaust passage portion (9, 10) to circulate, as an EGR gas, a part of the introduced exhaust gas in the exhaust passage portion (9, 10) into the body (2); and
an EGR valve (14) to adjust a flow rate at which the EGR gas flows through the EGR passage portion (12, 13, 26, 15),
wherein the EGR valve (14) is attached to the exhaust side wall (1B) of the body (2), the EGR valve being located above the exhaust outlet (4b) and the exhaust passage portion (9, 10) in a vehicle up-down direction,
the body (2) of the internal combustion engine (1) includes a cylinder head (4) at which the exhaust outlet (4b) is formed, and a cylinder head cover (25) attached to an upper portion of the cylinder head (4),
the cylinder head cover (25) is provided with a head cover EGR passage portion (26) that constitutes a part of the EGR passage portion (12, 13, 26, 15), and
the EGR valve (14) is attached to the exhaust side wall (1B) of the cylinder head cover (25).

2. The internal combustion engine (1) with an EGR device (11) as claimed in claim 1, wherein
the EGR valve (14) has:
an EGR valve body (14A) with a valve element (14C) to adjust the flow rate of the EGR gas; and
a driving portion (14B) attached to the EGR valve body (14A), to drive the valve element (14C), and
the driving portion (14B) is farther away from the exhaust cleaning device (9) than the EGR valve body (14A) is.

3. The internal combustion engine (1) with an EGR device (11) as claimed in claim 1, wherein
the cylinder head cover (25) includes an intake side wall (1A) on an opposite side from the exhaust side wall (1B),
the head cover EGR passage portion (26) is formed in a tubular shape, in which a through-hole (26a) extends from an exhaust-side open portion (26b) formed at the exhaust side wall (1B) of the cylinder head cover (25) to an intake-side open portion (26c) formed at the intake side wall (1A) thereof,
the EGR valve (14) is attached to the exhaust side wall (1B) so as to cover the exhaust-side open portion (26b), and
the exhaust-side open portion (26b) is located at a higher position than the intake-side open portion (26c).

## Patentansprüche

1. Verbrennungsmotor (1) mit einer AGR-Vorrichtung (11), welcher an einem Fahrzeug montiert ist, wobei ein Körper (2) des Verbrennungsmotors (1) an einer Auspuffseitenwand (1B) davon mit einem Auspuffauslass (4b) gebildet ist, durch welchen ein Abgas von dem Körper (2) in einen Auspuffkanalabschnitt (9, 10) eingeführt wird, wobei der Auspuffkanalabschnitt (9, 10) mit dem Auspuffauslass (4b) verbunden ist und durch eine Auspuffreinigungsvorrichtung (9) und ein Auspuffrohr (10) konstituiert ist,
wobei die AGR-Vorrichtung umfasst:
einen AGR-Kanalabschnitt (12, 13, 26, 15), welcher von dem Auspuffkanalabschnitt (9, 10) abzweigt, um einen Teil des eingeführten Abgases in dem Auspuffkanalabschnitt (9, 10) als ein AGR-Gas in den Körper (2) zu zirkulieren,
ein AGR-Ventil (14), um eine Strömungsrate einzustellen, mit welcher das AGR-Gas durch den AGR-Kanalabschnitt (12, 13, 26, 15) strömt,
wobei das AGR-Ventil (14) an einer Auspuffseitenwand (1B) des Körpers (2) angebracht ist, wobei das AGR-Ventil in einer Fahrzeug-Oben-Unten-Richtung oberhalb des Auspuffauslasses (4b) und des Auspuffkanalabschnitts (9, 10) angeordnet ist,
der Körper (2) des Verbrennungsmotors (1) einen Zylinderkopf (4), an welchem der Auspuffauslass (4b) gebildet ist, und eine Zylinderkopfabdeckung (25) umfasst, welche an einem oberen Abschnitt des Zylinderkopfs (4) angebracht ist,
die Zylinderkopfabdeckung (25) mit einem Kopfabdeckungs-AGR-Kanalabschnitt (26) bereitgestellt ist, welcher einen Teil des AGR-Kanalabschnitts (12, 13, 26, 15) konstituiert, und
das AGR-Ventil (14) an der Auspuffseitenwand (1B) der Zylinderkopfabdeckung (25) angebracht ist.

2. Verbrennungsmotor (1) mit einer AGR-Vorrichtung (11) nach Anspruch 1, wobei
das AGR-Ventil (14) aufweist:
einen AGR-Ventilkörper (14A) mit einem Ventilelement (14C), um die Strömungsrate des AGR-Gases einzustellen; und
einen Antriebsabschnitt (14B), welcher an dem AGR-Ventilkörper (14A) angebracht ist, um das Ventilelement (14C) anzutreiben, und
der Antriebsabschnitt (14B) weiter von der Auspuffreinigungsvorrichtung (9) entfernt ist als es der AGR-Ventilkörper (14A) ist.

3. Verbrennungsmotor (1) mit einer AGR-Vorrichtung (11) nach Anspruch 1, wobei
die Zylinderkopfabdeckung (25) an einer von der Auspuffseitenwand (1B) entgegengesetzten Seite eine Einlassseitenwand (1A) umfasst,
der Kopfabdeckungs-AGR-Kanalabschnitt (26) in einer röhrenförmigen Form gebildet ist, in welcher sich ein Durchgangsloch (26a) von einem auspuffseitigen offenen Abschnitt (26b), welcher an der Auspuffseitenwand (1B) der Zylinderkopfabdeckung (25) gebildet ist, zu einem einlassseitigen offenen Abschnitt (26c) erstreckt, welcher an der Einlassseitenwand (1A) davon gebildet ist,
das AGR-Ventil (14) an der Auspuffseitenwand (1B) angebracht ist, um den auspuffseitigen offenen Abschnitt (26b) abzudecken, und
der auspuffseitige offene Abschnitt (26b) an einer höheren Position angeordnet ist als es der einlassseitige offene Abschnitt (26c) ist.

## Revendications

1. Moteur à combustion interne (1) avec un dispositif EGR (11) monté sur un véhicule, un corps (2) du moteur à combustion interne (1) étant formé, au niveau d'une paroi latérale d'échappement (1B) de celui-ci, avec une sortie d'échappement (4b) par laquelle un gaz d'échappement provenant du corps (2) est introduit dans une partie de passage d'échappement (9, 10), la partie de passage d'échappement (9, 10) étant reliée à la sortie d'échappement (4b) et constituée d'un dispositif de nettoyage d'échappement (9) et d'un tuyau d'échappement (10),
le dispositif EGR comprenant :
une partie de passage EGR (12, 13, 26, 15) se ramifiant de la partie de passage d'échappement (9, 10) pour faire circuler, en tant que gaz EGR, une partie du gaz d'échappement introduit dans la partie de passage d'échappement (9, 10) dans le corps (2) ; et
une vanne EGR (14) pour ajuster un débit auquel le gaz EGR circule à travers la partie de passage EGR (12, 13, 26, 15),
dans lequel la vanne EGR (14) est fixée à la paroi latérale d'échappement (1B) du corps (2), la vanne EGR étant située au-dessus de la sortie d'échappement (4b) et de la partie de passage d'échappement (9, 10) dans une direction de haut en bas du véhicule,
le corps (2) du moteur à combustion interne (1) comporte une culasse (4) au niveau de laquelle est formée la sortie d'échappement (4b), et un couvre-culasse (25) fixé à une partie supérieure de la culasse (4),
le couvre-culasse (25) est pourvu d'une partie de passage EGR de couvre-culasse (26) qui constitue une partie de la partie de passage EGR (12, 13, 26, 15), et
la vanne EGR (14) est fixée à la paroi latérale d'échappement (1B) du couvre-culasse (25).

2. Moteur à combustion interne (1) avec un dispositif EGR (11) selon la revendication 1, dans lequel
la vanne EGR (14) présente :
un corps de vanne EGR (14A) avec un élément de vanne (14C) pour ajuster le débit du gaz EGR ; et
une partie d'entraînement (14B) fixée au corps de vanne EGR (14A), pour entraîner l'élément de vanne (14C), et
la partie d'entraînement (14B) est plus éloignée du dispositif de nettoyage d'échappement (9) que le corps de soupape EGR (14A).

3. Moteur à combustion interne (1) avec un dispositif EGR (11) selon la revendication 1, dans lequel
le couvre-culasse (25) comporte une paroi latérale d'admission (1A) d'un côté opposé à la paroi latérale d'échappement (1B),
la partie de passage EGR de couvre-culasse (26) est formée sous forme tubulaire, dans laquelle un trou traversant (26a) s'étend d'une partie ouverte côté échappement (26b) formée au niveau de la paroi latérale d'échappement (1B) du couvre-culasse (25) à une partie ouverte côté admission (26c) formée au niveau de sa paroi latérale d'admission (1A),
la vanne EGR (14) est fixée à la paroi latérale d'échappement (1B) de manière à recouvrir la partie ouverte côté échappement (26b), et
la partie ouverte côté échappement (26b) se trouve à une position plus haute que la partie ouverte côté admission (26c).
